# EUROPEAN PATENT SPECIFICATION

(11) **EP 2 156 656 B1**
(45) Date of publication and mention of the grant of the patent: **10.11.2010**
(21) Application number: 07859004.9
(22) Date of filing: 12.12.2007
(51) Int. Cl.: H04N 1/00, H04N 1/32, G06K 9/00

(54) **DIGITAL CAMERA AND METHOD OF STORING IMAGE DATA WITH PERSON RELATED METADATA**
DIGITALKAMERA UND VERFAHREN ZUM SPEICHERN VON BILDDATEN MIT PERSONENBEZOGENEN METADATEN
APPAREIL PHOTO NUMÉRIQUE ET PROCÉDÉ DE STOCKAGE DE DONNÉES D'IMAGE AVEC DES MÉTADONNÉES LIÉES AUX PERSONNES

(30) Priority: 15.06.2007 US 763469
(43) Date of publication of application: 24.02.2010
(73) Proprietor: Sony Ericsson Mobile Communications AB, 221 88 Lund (SE)
(72) Inventor: KRETZ, Martin, S-233 52 Lund (SE)
(74) Representative: Aurell, Henrik
(86) International application number: PCT/IB2007/003867
(87) International publication number: WO 2008/152437

(56) References cited:
- EP-A- 1 566 974
- WO-A-01/31893
- WO-A-2004/015986
- WO-A-2006/126141
- US-A1- 2003 117 501
- US-A1- 2004 008 906
- US-A1- 2006 017 832

## Description

### TECHNICAL FIELD OF THE INVENTION

The technology of the present disclosure relates generally to photography and, more particularly, to a system and method to store data relating to a person taking a photograph with an image file corresponding to the photograph.

### DESCRIPTION OF THE RELATED ART

A digital camera may image a field of view of the camera to take a photograph. The photograph may be stored as an image file by a memory device. Stored with the photograph may be information about the photograph. For instance, metadata may be associated with the photograph. Metadata may include, for example, the date and time at which the photograph was taken. Additional metadata may be added to the photograph. For instance, a user may manually enter the names of one or more persons appearing in the photograph (referred to as the "subject" for one person or the "subjects" for multiple persons) and the person who took the photograph by composing the shot and depressing a shutter button (referred to as the "author" or "shooter").

Devices with both forward and rearward facing cameras are known. WO-A-01/31893 discloses such a device using facial recognition to control capture of an image of the user, displayed on a sput screen with the other image.

### SUMMARY

To enhance the information stored with a photograph, including information regarding the author of a photograph, the present disclosure describes an improved photography device and method of managing image data. The digital camera system includes a primary camera assembly for imaging a forward scene that includes subject matter of interest to the user of the camera assembly. The camera system also includes a secondary camera assembly for imaging a rearward scene. The secondary camera assembly may be arranged to capture the face of the user in the photograph of the rearward scene. In one embodiment, the field of view of the secondary camera assembly may be large enough to capture the faces of additional persons that are located behind the camera system and near the user. In still further embodiments, the image of the rearward scene may be analyzed with facial recognition software to ascertain the identity of the user. Other persons in the image of the rearward scene also may be identified. The rearward scene image, the identity of the person(s) in the rearward scene image, or both are associated with the image captured with the primary camera assembly in the form of metadata. Facial recognition software also may be applied to the image of the forward scene.

The invention is set out in the appended claims.

These and further features will be apparent with reference to the following description and attached drawings. In the description and drawings, particular embodiments have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIGs. 1 and 2 are respectively a schematic front view and a schematic rear view of a mobile telephone that includes a primary camera assembly and a secondary camera assembly;
FIG. 3 is a schematic block diagram of portions of the mobile telephone and the camera assemblies of FIGs 1 and 2;
FIG. 4 is a schematic diagram of a communications system in which the mobile telephone may operate; and
FIG. 5 is a flow diagram of a method of operating the camera assemblies.

### DETAILED DESCRIPTION OF EMBODIMENTS

Embodiments will now be described with reference to the drawings, wherein like reference numerals are used to refer to like elements throughout. It will be understood that the figures are not necessarily to scale.

Aspects of this disclosure relate to photography. The techniques described herein may be applied to taking photographs with a photography device, such as a digital still camera. Also, the techniques described herein may be carried out by any type of electronic device that includes a suitably configured camera apparatus. For instance, a dedicated digital still camera and/or a digital video camera may be constructed as described herein. As another example, many mobile telephones may be constructed in accordance with the present description. By way of example, portions of the following description are made in the context of a mobile telephone that includes a primary camera assembly and a secondary camera assembly. However, it will be appreciated that the disclosed structural components and photography techniques have application outside the context of a mobile telephone and may relate to any type of appropriate electronic equipment, examples of which include a dedicated camera system, a media player, a gaming device, a computer and so forth. Also, while the disclosed techniques are described in the context of still photography, the techniques may be equally applied to video photography.

For purposes of the description herein, the interchangeable terms "electronic equipment" and "electronic device" include portable radio communication equipment. The term "portable radio communication equipment," which herein after is referred to as a "mobile radio terminal," includes all equipment such as mobile telephones, pagers, communicators, electronic organizers, personal digital assistants (PDAs), smartphones, portable communication apparatus or the like.

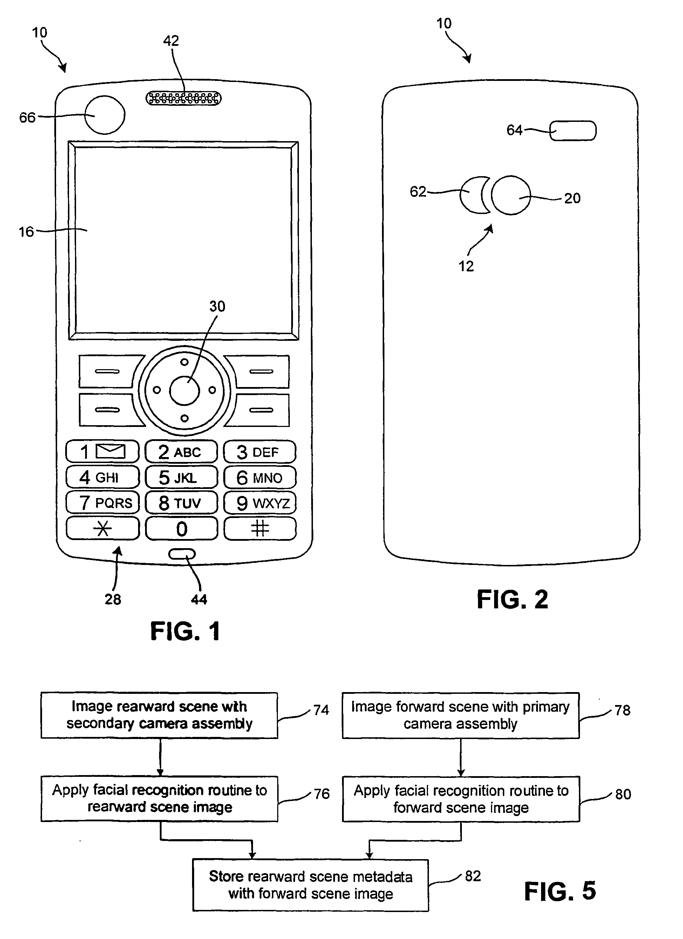

Referring initially to FIGs. 1 through 3, an electronic device 10 is shown. The electronic device 10 includes a primary camera assembly 12 and a secondary camera assembly 14. The primary camera assembly 12 is arranged to have a field of view that faces forward from a user who composes an image while looking at an electronic viewfinder 16. In some implementations, it is contemplated that the electronic viewfinder 16 will be on an opposite side of a housing 18 that retains the electronic viewfinder 16 from a side of the housing 18 that retains a final optical element 20 (e.g., a lens or a protective cover) of imaging optics 22 for the primary camera assembly 12. In other implementations, the electronic viewfinder 16 may be mounted on a moveable member, such as a member that is hinged to the electronic device 10 and that may pivot and/or twist with respect to a portion of the electronic device 10 that retains the final optical element 20. In one embodiment, the electronic viewfinder 16 is embodied as a display, and will also be referred to as a display 16.

The second camera assembly 14 is arranged to have a field of view that faces toward the user as the user composes and takes an image with the primary camera assembly 12. In one embodiment, the fields of view of the camera assemblies 12 and 14 are oppositely directed. In other embodiments, the fields of view of the camera assemblies 12 and 14 are different, but not necessarily opposite. For instance, imaging optics of the secondary camera assembly 14 may be mounted on a member that may be moved with respect to the field of view of the primary camera assembly 12 (e.g., the secondary camera assembly 14 may be mounted on a movable member that also retains the electronic viewfinder 16). Therefore, the rearward scene imaged by the secondary camera assembly 14 need not be oppositely directed from the forward scene imaged by the primary camera assembly 12. As such, the term "rearward scene" includes any scene that is different from the scene imaged with the primary camera assembly 12. The field of view of the secondary camera assembly 14 may be broad enough so that persons near the user may be captured in an image taken with the second camera assembly 14. Additional details of the operation of the camera assemblies 12 and 14, and the interaction of the image data respectively captured by the camera assemblies 12 and 14 will be described in greater detail below.

The techniques for image data management may be embodied as executable code that is resident in and executed by the electronic device 10. For example, in one embodiment, the electronic device 10 may include a controller or processor that executes a dual camera function 24 that is stored on a computer or machine readable medium. The dual camera function 24 may be used to govern overall operation of the camera assemblies 12 and 14, or specific aspects of their operation. In particular, the dual camera function 24 may be used to process image data generated by the camera assemblies 12 and 14. The dual camera function 24 may be a stand-alone software application or form a part of a software application that carries out additional tasks related to the electronic device 10.

As indicated, the camera assemblies 12 and 14 may be embodied as a dedicated camera or as part of a device that performs other functions, such as making telephone calls, playing audio and/or video content, and so forth. For instance, in the illustrated embodiment, the camera assemblies 12 and 14 are included as part of an electronic device that performs functions in addition to taking photographs. The electronic device of the illustrated embodiment is a mobile telephone and will be referred to as the mobile telephone 10. The mobile telephone 10 is shown as having a "brick" or "block" form factor housing, but it will be appreciated that other housing types may be utilized, such as a "flip-open" form factor (e.g., a "clamshell" housing) or a slide-type form factor (e.g., a "slider" housing).

As indicated, the mobile telephone 10 may include a display 16. The display 16 displays information to a user such as operating state, time, telephone numbers, contact information, various navigational menus, etc., that enable the user to utilize the various features of the mobile telephone 10. The display 16 also may be used to visually display content received by the mobile telephone 10 and/or retrieved from a memory 26 of the mobile telephone 10. The display 16 may be used to present images, video and other graphics to the user, such as photographs, mobile television content and video associated with games. In addition, the display 16 may be used as the electronic viewfinder during operation of one or both of the camera assemblies 12, 14. In an embodiment where the electronic device is a dedicated camera, the display 16 may be included with the camera to serve as an electronic viewfinder and to display captured images. In addition to an electronic viewfinder, an optical viewfinder may be present.

A keypad 28 provides for a variety of user input operations. For example, the keypad 28 may include alphanumeric keys for allowing entry of alphanumeric information such as telephone numbers, phone lists, contact information, notes, text, etc. In addition, the keypad 28 may include special function keys such as a "call send" key for initiating or answering a call, and a "call end" key for ending or "hanging up" a call. Special function keys also may include menu navigation and select keys to facilitate navigating through a menu displayed on the display 16. For instance, a pointing device and/or navigation keys may be present to accept directional inputs from a user. Special function keys may include audiovisual content playback keys to start, stop and pause playback, skip or repeat tracks, and so forth. Other keys associated with the mobile telephone may include a volume key, an audio mute key, an on/off power key, a web browser launch key, a camera key, etc. Keys or key-like functionality also may be embodied as a touch screen associated with the display 16. Also, the display 16 and keypad 28 may be used in conjunction with one another to implement soft key functionality.

During operation of the camera assemblies 12 and 14, one or more of the keys from the keypad 28 may serve to control the camera assemblies 12 and 14. For instance, one of the keys from the keypad 28 may serve as a shutter release button 30. The user may depress the shutter release button 30 to command the capturing of an image using the primary camera assembly 12. Also, full or partial depression of the shutter release button 30 may command the capturing an image using the secondary camera assembly 14.

The mobile telephone 10 includes call circuitry that enables the mobile telephone 10 to establish a call and/or exchange signals with a called/calling device, which typically may be another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as WiFi (e.g., a network based on the IEEE 802.11 standard), WiMax (e.g., a network based on the IEEE 802.16 standard), etc. Another example includes a video enabled call that is established over a cellular or alternative network.

The mobile telephone 10 may be configured to transmit, receive and/or process data, such as text messages, instant messages, electronic mail messages, multimedia messages, image files, video files, audio files, ring tones, streaming audio, streaming video, data feeds (including podcasts and really simple syndication (RSS) data feeds), and so forth. It is noted that a text message is commonly referred to by some as "an SMS," which stands for simple message service. SMS is a typical standard for exchanging text messages. Similarly, a multimedia message is commonly referred to by some as "an MMS," which stands for multimedia message service. MMS is a typical standard for exchanging multimedia messages. Processing data may include storing the data in the memory 26, executing applications to allow user interaction with the data, displaying video and/or image content associated with the data, outputting audio sounds associated with the data, and so forth.

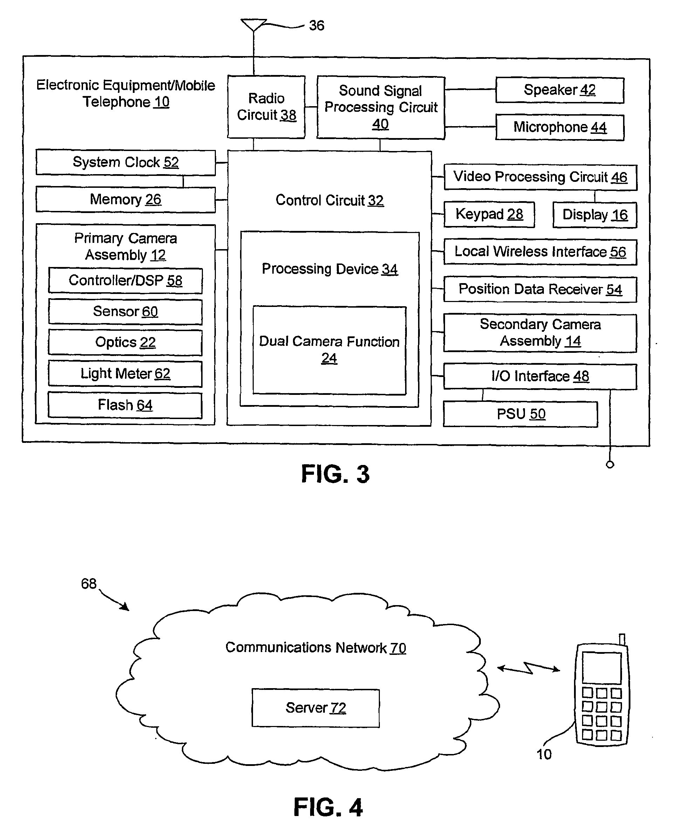

FIG. 3 represents a functional block diagram of the mobile telephone 10. For the sake of brevity, many features of the mobile telephone 10 will not be described in great detail. The mobile telephone 10 includes a primary control circuit 32 that is configured to carry out overall control of the functions and operations of the mobile telephone 10. The control circuit 32 may include a processing device 34, such as a central processing unit (CPU), microcontroller or microprocessor. The processing device 34 executes code stored in a memory (not shown) within the control circuit 32 and/or in a separate memory, such as the memory 26, in order to carry out operation of the mobile telephone 10. The memory 26 may be, for example, one or more of a buffer, a flash memory, a hard drive, a removable media, a volatile memory, a non-volatile memory, a random access memory (RAM), or other suitable device. In a typical arrangement, the memory 26 may include a non-volatile memory (e.g., a NAND or NOR architecture flash memory) for long term data storage and a volatile memory that functions as system memory for the control circuit 32. The volatile memory may be a RAM implemented with synchronous dynamic random access memory (SDRAM). The memory 26 may exchange data with the control circuit 32 over a data bus. Accompanying control lines and an address bus between the memory 26 and the control circuit 32 also may be present.

The processing device 34 may execute code that implements the dual camera function 24. It will be apparent to a person having ordinary skill in the art of computer programming, and specifically in application programming for mobile telephones, cameras or other electronic devices, how to program a mobile telephone 10 to operate and carry out logical functions associated with the dual camera function 24. Accordingly, details as to specific programming code have been left out for the sake of brevity. Also, while the dual camera function 24 is executed by the processing device 34 in accordance with an embodiment, such functionality could also be carried out via dedicated hardware or firmware, or some combination of hardware, firmware and/or software. Furthermore, the dual camera function 24 may be stored on a machine readable medium, such as the memory 26.

Continuing to refer to FIGs. 1 through 3, the mobile telephone 10 includes an antenna 36 coupled to a radio circuit 38. The radio circuit 38 includes a radio frequency transmitter and receiver for transmitting and receiving signals via the antenna 36. The radio circuit 38 may be configured to operate in a mobile communications system and may be used to send and receive data and/or audiovisual content. Receiver types for interaction with a mobile radio network and/or broadcasting network include, but are not limited to, global system for mobile communications (GSM), code division multiple access (CDMA), wideband CDMA (WCDMA), general packet radio service (GPRS), WiFi, WiMax, digital video broadcasting-handheld (DVB-H), integrated services digital broadcasting (ISDB), etc., as well as advanced versions of these standards.

The mobile telephone 10 further includes a sound signal processing circuit 40 for processing audio signals transmitted by and received from the radio circuit 38. Coupled to the sound processing circuit 40 are a speaker 42 and a microphone 44 that enable a user to listen and speak via the mobile telephone 10 as is conventional. The radio circuit 38 and sound processing circuit 40 are each coupled to the control circuit 32 so as to carry out overall operation. Audio data may be passed from the control circuit 32 to the sound signal processing circuit 40 for playback to the user. The audio data may include, for example, audio data from an audio file stored by the memory 26 and retrieved by the control circuit 32, or received audio data such as in the form of streaming audio data from a mobile radio service. The sound processing circuit 40 may include any appropriate buffers, decoders, amplifiers and so forth.

The display 16 may be coupled to the control circuit 32 by a video processing circuit 46 that converts video data to a video signal used to drive the display 16. The video processing circuit 46 may include any appropriate buffers, decoders, video data processors and so forth. The video data may be generated by the control circuit 32, retrieved from a video file that is stored in the memory 26, derived from an incoming video data stream that is received by the radio circuit 38 or obtained by any other suitable method.

The mobile telephone 10 may further include one or more I/O interface(s) 48. The I/O interface(s) 48 may be in the form of typical mobile telephone I/O interfaces and may include one or more electrical connectors. As is typical, the I/O interface(s) 48 may be used to couple the mobile telephone 10 to a battery charger to charge a battery of a power supply unit (PSU) 50 within the mobile telephone 10. In addition, or in the alternative, the I/O interface(s) 48 may serve to connect the mobile telephone 10 to a headset assembly (e.g., a personal handsfree (PHF) device) that has a wired interface with the mobile telephone 10. Further, the I/O interface(s) 48 may serve to connect the mobile telephone 10 to a personal computer or other device via a data cable for the exchange of data. The mobile telephone 10 may receive operating power via the I/O interface(s) 48 when connected to a vehicle power adapter or an electricity outlet power adapter. The PSU 50 may supply power to operate the mobile telephone 10 in the absence of an external power source.

The mobile telephone 10 also may include a system clock 52 for clocking the various components of the mobile telephone 10, such as the control circuit 32 and the memory 26.

The mobile telephone 10 also may include a position data receiver 54, such as a global positioning system (GPS) receiver, Galileo satellite system receiver or the like. The position data receiver 54 may be involved in determining the location of the mobile telephone 10.

The mobile telephone 10 also may include a local wireless interface 56, such as an infrared transceiver and/or an RF interface (e.g., a Bluetooth interface), for establishing communication with an accessory, another mobile radio terminal, a computer or another device. For example, the local wireless interface 56 may operatively couple the mobile telephone 10 to a headset assembly (e.g., a PHF device) in an embodiment where the headset assembly has a corresponding wireless interface.

With continuing reference to FIGs. 1 through 3, the primary camera assembly 12 may include a controller 58, such as a digital signal processor (DSP). In the illustrated embodiment, many control functions of the camera assembly 12 are carried out by the processing device 34. As such, the controller 58 may be downsized relative to a controller found in a dedicated camera device or the controller 58 omitted. In other embodiments of the mobile telephone 10 or when the primary camera assembly 12 is embodied in a dedicated camera, some or all of the primary camera assembly 12 control functions that are described as being carried out by the processing device 34 may be carried out by the controller 58.

In the illustrated embodiment, the primary camera assembly 12 is a digital camera that uses a sensor 60 (e.g., a charged-coupled device or CCD) to image a field of view as determined by imaging optics 22 of the camera assembly. A light meter 62 may detect illumination conditions in the field of view. A flash 64 may be present to offer supplemental illumination during taking of a photograph.

The secondary camera assembly 14 may be configured in the same manner as the primary camera assembly 12. For instance, the secondary camera assembly 14 may have a controller, a sensor, imaging optics including a final optical element 66 (e.g., a lens or a protective cover), a light meter and a flash. Some of these components may be combined with components of the primary camera assembly 12 or omitted. Therefore, the secondary camera assembly 14 may be controlled by the processing device 34 and/or the controller 58. In one embodiment, it is contemplated that the resolution and image quality capability of the secondary camera assembly 14 will be less sophisticated than the primary camera assembly 12.

The processing device 34 and/or the controller 58 may control various operational aspects of camera assemblies 12 and 14 including, but not limited to, light metering operations and management of exposure settings. The processing device 34 and/or controller 58 also may coordinate storage of image data captured with the primary camera assembly 12 and the secondary camera suddenly 14. For instance, the image data may be stored by the memory 26 in corresponding image files under the management of the dual camera function 24 as described in greater detail below.

With additional reference to FIG. 4, the mobile telephone 10 may be configured to operate as part of a communications system 68. The system 68 may include a communications network 70 having a server 72 (or servers) for managing calls placed by and destined to the mobile telephone 10, transmitting data to the mobile telephone 10 and carrying out any other support functions. The server 72 communicates with the mobile telephone 10 via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 70 may support the communications activity of multiple mobile telephones 10 and other types of end user devices. As will be appreciated, the server 72 may be configured as a typical computer system used to carry out server functions and may include a processor configured to execute software containing logical instructions that embody the functions of the server 68 and a memory to store such software.

With additional reference to FIG. 5, illustrated are logical operations to implement an exemplary method of managing and storing image data captured with the primary camera assembly 12 and the secondary camera assembly 14. The exemplary method may be carried out by executing code, such as the dual camera function 24, with the processing device 34 and/or the controller 58, for example. Thus, the flow chart of FIG. 5 may be thought of as depicting steps of a method carried out by the mobile telephone 10. Although FIG. 5 shows a specific order of executing functional logic blocks, the order of executing the blocks may be changed relative to the order shown. Also, two or more blocks shown in succession may be executed concurrently or with partial concurrence. Certain blocks also may be omitted.

The logical flow for the method of managing and storing image data may begin in block 74. In block 74, an image of the rearward scene may be captured using the secondary camera assembly 14. This image may be referred to as a rearward image and a corresponding image file may be stored in the memory 26. Following block 74, the logical flow may proceed to block 76 where a facial recognition routine may be applied to the rearward image file. The facial recognition routine may form part of the dual camera function 24 or may be part of a separate software application executed by mobile telephone 10 or by the server 72 (e.g., image data may be transmitted to the server 72 for analysis). The facial recognition routine may be executed to ascertain an identity of one or more individuals appearing in the rearward image. In many situations, the face of the user may be captured in the rearward image as the user observes the electronic viewfinder 16 for composition of a photograph generated by the primary camera assembly 12. The faces of other individuals also may appear in the rearward image.

In addition to capturing the rearward image, the method may include capturing an image of the forward scene using the primary camera assembly 12 as depicted in block 78. This image may be referred to as a forward image and a corresponding image file may be stored in the memory 26. Following block 78, logical flow may proceed to block 80 where the facial recognition routine may be applied to the forward image. The facial recognition routine may be executed to ascertain an identity of one or more individuals appearing in the forward image.

As will be appreciated, the facial recognition routine may analyze the rearward and/or forward images to identify facial characteristics for each detected individual in the image(s). Then, the facial recognition routine may attempt to match those characteristics to a known individual. For instance, the facial characteristics may be compared to previously identified characteristics that are stored in a database and that are respectively associated with known individuals.

Capturing the rearward image and applying the facial recognition routine to the rearward image may be carried out at any appropriate time relative to capturing of the forward image and applying official recognition routine to the forward image. For example, the rearward image may be captured and analyzed during composition of the forward image (e.g., prior to capturing of the forward image). In one embodiment, the rearward image may be captured as the user aims the primary camera assembly 12 using field of view feedback information displayed on the electronic viewfinder 16. In another embodiment, a partial depression of the shutter release button 30 may command capturing of the rearward image, which may be followed by a full depression this shutter release button 30 to command a capturing of the forward image. In yet another embodiment, depression of the shutter release button 30 may command capturing of both the rearward image in the forward image at the same time or approximately the same time.

Following blocks 76 and 80, the logical flow may proceed to block 82 where metadata derived from the image of the rearward scene may be stored with the file used to store the image of the forward scene. In one embodiment, the metadata that is associated with the forward scene image file is the image of the rearward scene. For instance, a thumbnail image of the rearward scene in an appropriate format (e.g., an exchangeable image file format or Exif) may be appended to the forward scene image file. Other exemplary formats include, but are not limited to, International Press Telecommunications Council (IPTC) and extensible metadata platform (XMP). In another embodiment, the results of the application of the facial recognition routine to the rearward image may be appended to the forward scene image file. These results may be an identity of any individual(s) identified from the rearward image. The identity may take the form of text, such as a name or a nickname, or may be a graphic or an image. The identity may be stored in an author-tag associated with the forward scene image file.

Additional metadata may be associated with the forward scene image file, such as the identity of any individual(s) identified from the application of the facial recognition routine to the forward image (which may be stored in a subject-tag associated with the forward scene image file), a time stamp (e.g., date and time) established when the forward image is captured, a location where the forward image was captured, and so forth.

The metadata may be stored in any appropriate format, such as in one of the above-mentioned Exif, IPTC or XMP formats. The metadata may be stored as part of the forward image file, for example. Storing data derived from the rearward image as part of the forward image file is an exemplary technique for associating data with the forward scene image. In another exemplary embodiment, the data derived from the rearward scene image may be stored in a separate file that is made to be associated with the forward image scene file, such as a sidecar. In another exemplary embodiment, the data derived from the rearward scene image may be stored in a database.

In some embodiments, storing the rearward image file apart from the forward image file need not be carried out. In embodiments where separate rearward and forward image files are stored, the rearward image file may be deleted following one of block 76 or block 82. Also, the analyzing of the rearward image and/or the forward image with the facial recognition routine may be omitted.

Disclosed have been a system and a method of associating user-based information with a photograph. The user-based information may be in the form of a photograph of the user and/or the identity of the user. In this manner, accurate information regarding the author of a photograph may be preserved even in situations where the photograph is taken with a camera that is shared among multiple individuals to take multiple photographs. In addition, the appearance of the author may be captured at the time of taking the main photograph. The identity and/or appearance may be of interest to various individuals when viewing the main photograph at a later point in time. Also, the identity and/or appearance of the author may contribute to the content of the main photograph when posted on a website or as part of a blog, for example. In addition, the identity and/or appearance of the author may enhance artistic impression associated with the main photograph.

Although certain embodiments have been shown and described, it is understood that equivalents and modifications falling within the scope of the appended claims will occur to others who are skilled in the art upon the reading and understanding of this specification.

## Claims

1. A method of managing image data, comprising:
imaging a forward scene with a first camera assembly (12) to generate a forward scene image file;
imaging a rearward scene with a second camera assembly (14) to generate rearward scene image data; and **characterized by**
storing data derived from the rearward scene image data with the forward scene image file as an indication of an identity of the user of the camera assemblies wherein the data derived from the rearward scene image data is at least one of image data and a text identifier associated with the user that is derived by applying a facial recognition routine to the rearward scene image data and storing the derived image data and/or text identifier as metadata of the forward scene image file as said indication of an identity of the user of the camera assemblies.

2. The method of claim 1, further comprising associating a text identifier associated with an individual appearing in the image of the forward scene that is derived by applying a facial recognition routine to the forward scene image file.

3. The method of any of claims 1-2, wherein the primary camera assembly and the secondary camera assembly form part of a mobile telephone (10).

4. The method of any of claims 1-3, wherein a direction of a field of view of the primary camera assembly is opposite a direction of a field of view of the secondary camera assembly.

5. The method of any of claims 1-4, wherein a direction of a field of view of the secondary camera assembly is movable with respect to a direction of a field of view of the primary camera assembly.

6. A photography device, comprising:
a first camera assembly (12) for imaging a forward scene and generating a forward scene image file;
a second camera assembly (14) for imaging a rearward scene and generating rearward scene image data;
a memory (26) for storing the forward scene image file; and **characterized by**
a controller (32) configured to store data derived from the rearward scene image data with the forward scene image file as an indication of an identity of the user of the photography device wherein the data derived from the rearward scene image data is at least one of image data and a text identifier associated with the user that is derived by applying a facial recognition routine to the rearward scene image data, and to store the derived image data and/or text identifier as metadata of the forward scene image file as said indication of an identity of the user of the photography device.

## Patentansprüche

1. Verfahren zum Verwalten von Bilddaten, welches umfasst:
Abbilden einer vorwärts-seitigen Szene mit einem ersten Kameraaufbau (12) zum Erzeugen einer Bilddatei einer vorwärts-seitigen Szene;
Abbilden einer rückwärts-seitigen Szene mit einem zweiten Kameraaufbau (14) zum Erzeugen von Bilddaten einer rückwärts-seitigen Szene; und **gekennzeichnet durch**
Speichern von Daten, welche aus den Bilddaten der rückwärts-seitigen Szene erlangt werden, mit der Bilddatei der vorwärts-seitigen Szene als eine Indikation einer Identität des Benutzers der Kameraaufbauten, wobei die Daten, welche aus den Bilddaten der rückwärts-seitigen Szene erlangt werden, wenigstens Bilddaten oder ein Text-Identifikator sind, welche mit dem Benutzer assoziiert sind, welcher **durch** Anwenden einer Gesichtserkennungsroutine auf die Bilddaten der rückwärts-seitigen Szene erlangt wird, und Speichern der abgeleiteten Bilddaten und/oder des Text-Identifikators als Metadaten der Bilddatei der vorwärts-seitigen Szene als die Indikation einer Identität des Benutzers der Kameraaufbauten.

2. Verfahren nach Anspruch 1, welches ferner das Assoziieren eines Text-Identifikators umfasst, welcher mit einer Person assoziiert ist, welche in dem Bild der vorwärts-seitigen Szene auftaucht, welche durch Anwenden einer Gesichtserkennungsroutine auf die Bilddatei der vorwärts-seitigen Szene erhalten wird.

3. Verfahren nach einem der Ansprüche 1-2, wobei der primäre Kameraaufbau und der sekundäre Kameraaufbau Teil eines Mobiltelefons (10) bilden.

4. Verfahren nach einem der Ansprüche 1-3, wobei die Richtung eines Sichtfeldes des primären Kameraaufbaus entgegengesetzt zu einer Richtung eines Sichtfelds des sekundären Kameraaufbaus ist.

5. Verfahren nach einem der Ansprüche 1-4, wobei eine Richtung eines Sichtfelds des sekundären Kameraaufbaus bewegbar hinsichtlich einer Richtung eines Sichtfelds des primären Kameraaufbaus ist.

6. Fotografier-Vorrichtung, welche umfasst:
einen ersten Kameraaufbau (12) zum Abbilden einer vorwärts-seitigen Szene und Erzeugen einer Bilddatei einer vorwärts-seitigen Szene;
einen zweiten Kameraaufbau (14) zum Abbilden einer rückwärts-seitigen Szene und Erzeugen von Bilddaten einer rückwärts-seitigen Szene;
einen Speicher (26) zum Speichern der Bilddatei der vorwärts-seitigen Szene; und **gekennzeichnet durch**
eine Steuerung (320), welche konfiguriert ist, Daten zu speichern, welche aus den Bilddaten der rückwärts-seitigen Szene erhalten werden, mit der Bilddatei der vorwärts-seitigen Szene, als eine Indikation einer Identität des Benutzers der Fotografier-Vorrichtung, wobei die Daten, welche aus den Bilddaten der rückwärts-seitigen Szene erhalten werden, wenigstens Bilddaten oder ein Text-Identifikator sind, welche mit dem Benutzer assoziiert sind, welcher **durch** Anwenden einer Gesichtserkennungsroutine auf die Bilddaten der rückwärts-seitigen Szene erhalten wird, und die abgeleiteten Bilddaten und/oder den Text-Identifikator als Metadaten der Bilddatei der vorwärts-seitigen Szene als die Indikation einer Identität des Benutzers der Fotografier-Vorrichtung zu speichern.

## Revendications

1. Procédé de gestion de données d'image, comprenant :
la formation d'image d'une scène vers l'avant à l'aide d'un premier ensemble (12) de prise de vue pour engendrer un fichier d'image de scène vers l'avant ;
la formation d'image d'une scène vers l'arrière à l'aide d'un second ensemble (14) de prise de vue pour engendrer des données d'image de scène vers l'arrière ; et **caractérisé**
**par** la mémorisation de données obtenues à partir des données d'image de scène vers l'arrière avec le fichier d'image de scène vers l'avant en tant qu'indication de l'identité de l'utilisateur des ensembles de prise de vue, les données obtenues à partir des données d'image de scène vers l'arrière étant au moins l'un de données d'image et d'un identificateur sous forme de texte associé à l'utilisateur qui est obtenu en appliquant un programme de reconnaissance de visage aux données d'image de scène vers l'arrière et par la mémorisation des données d'image obtenues et/ou de l'identificateur sous forme de texte sous forme de métadonnées du fichier d'image de scène vers l'avant en tant que ladite indication de l'identité de l'utilisateur des ensembles de prise de vue.

2. Procédé selon la revendication 1, comprenant en outre l'association d'un identificateur sous forme de texte associé à un individu apparaissant dans l'image de la scène vers l'avant qui est obtenu en appliquant un programme de reconnaissance de visage au fichier d'image de scène vers l'avant.

3. Procédé selon l'une quelconque des revendications 1 et 2, dans lequel l'ensemble principal de prise de vue et l'ensemble secondaire de prise de vue font partie d'un téléphone mobile (10).

4. Procédé selon l'une quelconque des revendications 1 à 3, dans lequel la direction du champ de vision de l'ensemble principal de prise de vue est opposée à la direction du champ de vision de l'ensemble secondaire de prise de vue.

5. Procédé selon l'une quelconque des revendications 1 à 4, dans lequel la direction du champ de vision de l'ensemble secondaire de prise de vue est mobile par rapport à la direction du champ de vision de l'ensemble principal de prise de vue.

6. Dispositif de photographie, comprenant :
un premier ensemble (12) de prise de vue destiné à former l'image d'une scène vers l'avant et à engendrer un fichier d'image de scène vers l'avant ;
un second ensemble (14) de prise de vue destiné à former l'image d'une scène vers l'arrière et à engendrer des données d'image de scène vers l'arrière ;
une mémoire (26) destinée à mémoriser le fichier d'image de scène vers l'avant ; et **caractérisé**
**par** un régisseur (32) constitué pour mémoriser des données obtenues à partir des données d'image de scène vers l'arrière avec le fichier d'image de scène vers l'avant en tant qu'indication de l'identité de l'utilisateur du dispositif de photographie, les données obtenues à partir des données d'image de scène vers l'arrière étant au moins l'un de données d'image et d'un identificateur sous forme de texte associé à l'utilisateur qui est obtenu en appliquant un programme de reconnaissance de visage aux données d'image de scène vers l'arrière et pour mémoriser les données d'image obtenues et/ou l'identificateur sous forme de texte sous forme de métadonnées du fichier d'image de scène vers l'avant en tant que ladite indication de l'identité de l'utilisateur du dispositif de photographie.
